(19) Europäisches Patentamt
European Patent Office
Office européen des brevets

(11) **EP 1 816 218 A1**

(12) **EUROPEAN PATENT APPLICATION**
published in accordance with Art. 158(3) EPC

(43) Date of publication:
**08.08.2007 Bulletin 2007/32**

(51) Int Cl.:
***C21D 1/18*** *(2006.01)*          ***C21D 1/42*** *(2006.01)*
***H05B 6/06*** *(2006.01)*

(21) Application number: **05787952.0**

(22) Date of filing: **27.09.2005**

(86) International application number:
**PCT/JP2005/017695**

(87) International publication number:
**WO 2006/038488 (13.04.2006 Gazette 2006/15)**

(84) Designated Contracting States:
**DE FR**

(30) Priority: **01.10.2004 JP 2004290314**

(71) Applicant: **NTN CORPORATION**
**Osaka-shi, Osaka 550-0003 (JP)**

(72) Inventors:
• **FUJITA, Takumi**
**hikata, Kuwana-shi, Mie 5110811; (JP)**

• **SUZUKI, Nobuyuki**
**hi, Shizuoka 4388510; (JP)**

(74) Representative: **GROSSE BOCKHORNI**
**SCHUMACHER**
**Patent- und Rechtsanwälte**
**Elsenheimerstrasse 49**
**80687 München (DE)**

(54) **HIGH-FREQUENCY HEAT TREATING SYSTEM, HIGH-FREQUENCY HEAT TREATING METHOD AND PROCESSED PRODUCT PRODUCED BY THE METHOD**

(57)    In order to provide a heat treatment apparatus and method for induction tempering through temperature control, the induction heat treatment apparatus of the present invention conducts tempering through high-frequency heating of a workpiece (1), and includes temperature control means for adjusting the temperature of the heating workpiece (1). The temperature control means includes heating means (2) for high-frequency heating a workpiece (1), temperature-control-dedicated temperature measuring means (3) for measuring the temperature of the workpiece (1) heated by the heating means (2), and temperature adjusting means connected to the temperature measuring means (3) for providing a temperature control signal to the heating means (2) based on temperature information from the temperature measuring means (3). Further, the induction heat treatment apparatus preferably includes tempering control means, including tempering-dedicated temperature measuring means (5) for measuring the tempering temperature of the workpiece (1) heated by the heating means (2), and tempering time adjusting means (6) connected to this temperature measuring means (5) for adjusting the tempering time based on temperature information from the temperature measuring means (5).

FIG.1

EP 1 816 218 A1

## Description

### Technical Field

The present invention relates to an induction heat treatment method of steel, more particularly, to an induction tempering method of steel. Furthermore, the present invention relates to an apparatus therefor, and a worked product produced by a method thereof.

### Background Art

The tempering process of steel is applied to a quenched item for the purpose of improving the toughness and stabilization in dimension. The conditions for tempering are often defined by the temperature for each type of steel, and the holding time is generally altered more or less depending upon the thickness of the product. This is because the effect of tempering is governed by the effect of temperature than the effect of the holding time. A possible approach to reduce the steps in the tempering process is to carry out tempering in a short period of time at high temperature. It is conventionally known to estimate the effect of tempering based on the temperature T of tempering and the time t for tempering using a tempering parameter P expressed by the equation set forth below (refer to J. H. Hollomon and L. D. Jaffe, Trans. Met. soc. Aime, 162, 1945, p. 223 (Non-Patent Document 1)).

$$P = T \{\log (t) + C\}$$

This equation represents the temperature and time required to obtain the same tempering effect. For practical usage, there is known the following equation representing the relationship of the material strength, tempering temperature, and tempering time (refer to Japanese Patent Laying-Open No. 10-102137 (Patent Document 1)).

$$X = 1 - \exp\{- (kt)^N\}$$

$$k = A\exp(- Q/RT)$$

$$M = M_0 - (M_0 - M_f)X$$

(where X: rate of change in mechanical property, k: reaction rate coefficient, t: tempering time, N: time index, A: vibration factor term, Q: activation energy, R: gas constant, T: tempering temperature, M: hardness after tempering, $M_0$: hardness after quenching, $M_f$: hardness of raw material).
Although the effect of tempering can be known based on temperature and time by the equations set forth above, tempering at a high temperature for a short period of time is not generally carried out in practice. This is to avoid generation of unevenness in tempering in the furnace for tempering. Tempering is often carried out to treat many target objects at one time. Therefore, the tempering state in the furnace may be uneven depending upon the shape (thickness), the amount of objects to be treated, and the like. Thus, the treatment conditions in treating a large amount of objects at one time will correspond to a process carried out for a long period of time at a relatively low temperature less, likely to cause unevenness in the tempering state.
A treatment method suitable for tempering at a high temperature in a short period of time includes an induction heat treatment method that allows heat treatment individually on each product. It is reported that a substance of high efficiency can be obtained by rapid-heating tempering based on induction tempering, as compared to tempering using a normal controlled atmosphere furnace (refer to "Iron and Steel", Volume 74, 1998, p. 334 (Non-Patent Document 2) and p. 342 (Non -Patent Document 3) by Kawasaki et al.). However, induction tempering is not a common process. This may be due to the fact that identifying the heat treatment conditions is complicated since temperature control is difficult.
Patent Document 1: Japanese Patent Laying-Open No. 10-102137
Non-Patent Document 1: J. H. Hollomon and L. D. Jaffe, Trans. Met. soc. Aime, 162, 1945, p. 223.
Non-Patent Document 2: Kawasaki et al., "Iron and Steel" Volume 74, 1988, p. 334

Non-Patent Document 3: Kawasaki et al., "Iron and Steel" Volume 74, 1988, p. 342

**Disclosure of the Invention**

**Subject of the Invention**

The subject of the present invention is to provide a heat treatment apparatus for induction tempering by temperature control, a treatment method thereof, and a worked product produced by the method thereof.

**Means for Achieving the Subject**

An induction heat treatment apparatus of the present invention corresponds to a heat treatment apparatus for tempering through high-frequency heating of a workpiece, and is characterized by including temperature control means for adjusting the temperature of the heating workpiece. The temperature control means includes heating means for high-frequency heating a workpiece, temperature-control-dedicated temperature measuring means for measuring the temperature of the workpiece heated by the heating means, and temperature adjusting means connected to this temperature measuring means for providing a temperature control signal to the heating means based on temperature information from the temperature measuring means. Further, the induction heat treatment apparatus further includes tempering control means including tempering-dedicated temperature measuring means for measuring the tempering temperature of the workpiece heated by the heating means, and tempering time adjusting means connected to this temperature measuring means for adjusting the tempering time based on the temperature information from the temperature measuring means. The tempering time adjusting means preferably adjusts the tempering time by

$$t \; = \; [\ln\{(M_0 \; - \; M_f)/(M \; - \; M_f)\} \times \{A\exp(- \; Q/RT)\}^{-N}]^{1/N}$$

(where, t: tempering time, $M_0$: hardness after quenching, $M_f$: hardness of raw material, M: hardness after tempering, A: vibration factor term, Q: activation energy, R: gas constant, T: tempering temperature, N: time index). Steel is preferable as the workpiece.

An induction heat treatment method of the present invention effects tempering through high-frequency heating of a workpiece. The method includes a temperature control step of adjusting the temperature of a heating workpiece, and a tempering control step of measuring the tempering temperature for adjusting the tempering time. The temperature control step includes a heating step of high-frequency heating a workpiece, a temperature-control-dedicated temperature measuring step of measuring the temperature of the heated workpiece, and a temperature adjusting step of providing a temperature control signal based on the measured temperature information to control heating of the workpiece. The tempering control step includes a tempering-dedicated temperature measuring step of measuring the tempering temperature of the heating workpiece, and a tempering time adjusting step of adjusting the tempering time based on the measured temperature information. The tempering time adjusting step preferably adjusts the tempering time by

$$t \; = \; [\ln\{(M_0 \; - \; M_f)/(M \; - \; M_f)\} \times \{A\exp(- \; Q/RT)\}^{-N}]^{1/N}.$$

The worked product of the present invention is produced by such an induction heat treatment method.

**Effect of the Invention**

According to the present invention, a tempering process of a short period of time at high temperature through high-frequency heating is allowed. The number of tempering steps can be reduced and a worked product of high efficiency can be obtained. Further, a predetermined heat treatment quality can be achieved whatever the type of material treated.

**Brief Description of the Drawings**

Fig. 1 is a schematic diagram of a configuration of a typical induction heat treatment apparatus of the present invention.
Fig. 2 is a condition diagram of SUJ2 material representing the relationship between the tempering temperature and tempering time of the present invention.
Fig. 3 is a diagram to describe the relationship between the tempering temperature and tempering time of the present invention.

## Description of Reference Characters

1 workpiece, 2 heating means, 3 temperature-control-dedicated temperature measuring means, 4 temperature adjusting means, 5 tempering-dedicated temperature measuring means, 6 tempering time adjusting means

## Best Modes for Carrying Out the Invention

An induction heat treatment apparatus of the present invention includes temperature control means for adjusting the temperature of a workpiece, allowing tempering through high-frequency heating of a workpiece. Therefore, processing of a short period of time at high temperature is allowed for a workpiece such as steel, and the number of treatment steps can be reduced. Furthermore, rapid-heating tempering is effected for each individual material, allowing reduction in unevenness in the heat treatment quality. A worked product of high efficiency can be produced.

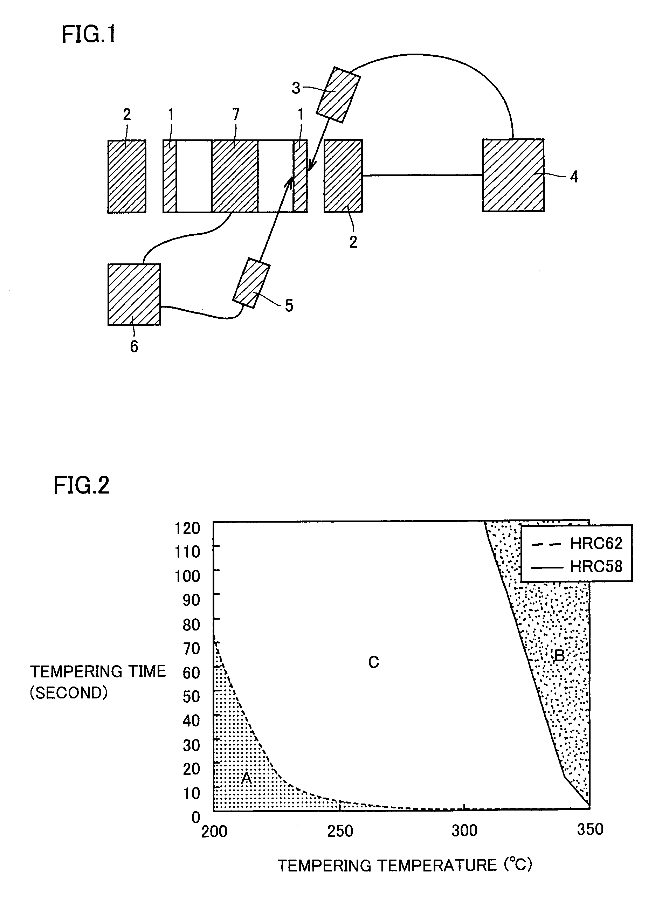

Typically as shown in Fig. 1, the temperature control means preferably includes heating means 2 for high-frequency heating a workpiece 1, temperature-control-dedicated temperature measuring means 3 for measuring the temperature of workpiece 1 heated by heating means 2, and temperature adjusting means 4 connected to temperature-control-dedicated temperature measuring means 3 for providing a temperature control signal to heating means 2 based on temperature information from the temperature measuring means.

The tempering control means preferably includes tempering-dedicated temperature measuring means 5 for measuring the tempering temperature of workpiece 1 heated by heating means 2, and tempering time adjusting means 6 connected to tempering-dedicated temperature measuring means 5 for adjusting the tempering time based on temperature information from the temperature measuring means. Preferably, a plurality of temperature measuring means (thermometer) for measuring the tempering temperature are provided. By providing a plurality of thermometers, unevenness in temperature in a workpiece can be reduced, and the quality of tempering can be monitored at a plurality of sites on the workpiece. The type of the thermometer includes, but not limited to, a radiation thermometer. A contact-type thermometer may be used, depending upon the layout of the apparatus.

An induction heat treatment apparatus of the present invention will be described specifically, based on an example of a 6206 type outer ring made of SUJ2 as the workpiece. This workpiece has been quenched at 850°C in an RX gas atmosphere furnace. With regards to the heat treatment standard of the SUJ2 material, the hardness after tempering is set to at least 58 HRC and not more than 62 HRC.

The following relationship is established for the material strength, tempering temperature, and tempering time, as indicated in Patent Document 1.

$$X = 1 - \exp\{-(kt)^N\}$$

$$k = A\exp(-Q/RT)$$

$$M = M_0 - (M_0 - M_f)X$$

(where X: rate of change in mechanical property, k: reaction rate coefficient, t: tempering time, N: time index, A: vibration factor term, Q: activation energy, R: gas constant, T: tempering temperature, M: hardness after tempering, $M_0$: hardness after quenching, $M_f$: hardness of raw material).

From these equations, the equation set forth below can be derived for tempering time t.

$$t = [\ln\{(M_0 - M_f)/(M - M_f)\} \times \{A\exp(-Q/RT)\}^{-N}]^{1/N}$$

Hardness after quenching $M_0$ and hardness of raw material $M_f$ in the equation can be obtained from actually measured values. Further, N, A, and Q can be determined empirically. Therefore, by inserting the value of tempering temperature T, tempering time t can be calculated by the present equation. The tempering time adjusting means of the present invention is directed to adjusting tempering time t based on the present equation. Since the present equation corresponds to the relationship between the heat treatment temperature and the holding time with respect to the standard and quality of the object subjected to heat treatment, this equation can be employed effectively for all types of workpieces.

According to the present equation for obtaining tempering time t, a condition diagram representing the relationship between tempering temperature T and tempering time t, as shown in Fig. 2, can be produced. Referring to Fig. 2, region A corresponds to the range of at least 62 HRC, region B corresponds to the range of 58 HRC at most, and region C corresponds to the range of 58-62 HRC. The tempering conditions can be obtained roughly from Fig. 2. A tempering process of a shorter time is allowed as the tempering temperature becomes higher. Therefore, it is desirable to set a higher tempering temperature from the standpoint of reducing the number of steps of heat treatment. In consideration of unevenness being facilitated in tempering caused by unevenness in temperature, however, it is preferable to determine the tempering temperature in view of the balance between the number of steps and unevenness in tempering.

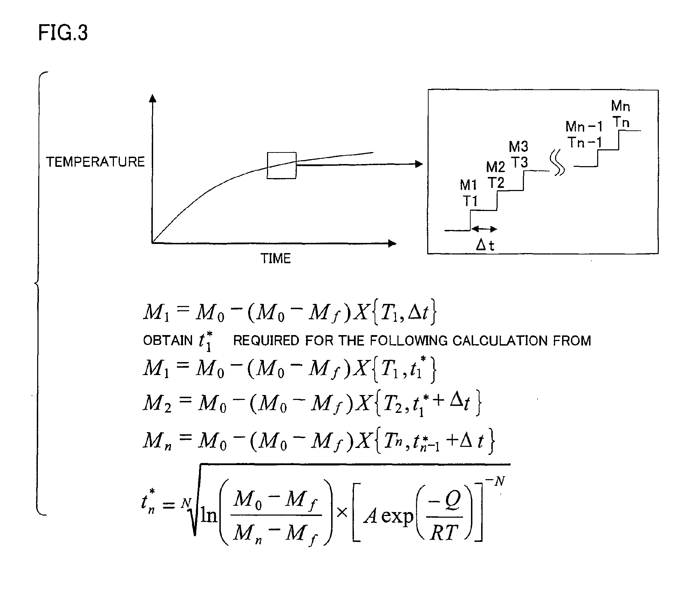

Upon determining the tempering conditions, they are input to temperature adjusting means 4 such as a personal computer shown in Fig. 1. Temperature adjusting means 4 is connected to temperature-control-dedicated temperature measuring means 3 and heating means 2 to provide a temperature control signal under PID control to heating means 2, based on the temperature information from temperature-control-dedicated temperature measuring means 3, for control of the heat pattern of workpiece 1. At the same time, the temperature information from tempering-dedicated temperature measuring means 5 is provided to tempering time adjusting means 6 that is a personal computer or the like. Determination is made whether heating is sufficient based on that heat pattern to identify the tempering end timing. Since the temperature information from tempering-dedicated temperature measuring means 5 changes from moment to moment, it is desirable to accumulate the values of M (hardness after tempering), as shown in Fig. 3. At the end of tempering, cooling is effected by coolant injecting means 7. It is to be noted that temperature adjusting means 4 and tempering time adjusting means 6 may be implemented by the same personal computer.

The induction heat treatment method of the present invention includes a temperature control step of adjusting the temperature of the heating workpiece, and a tempering control step of measuring the tempering temperature to adjust the tempering time. The temperature control step includes a heating step of high-frequency heating a workpiece, a temperature-control-dedicated temperature measuring step of measuring the temperature of the heated workpiece, and a temperature adjusting step of providing a temperature control signal based on the measured temperature information to control heating on the workpiece. The tempering control step includes a tempering-dedicated temperature measuring step of measuring the tempering temperature of a heating workpiece, and a tempering time adjusting step of adjusting the tempering time based on the measured temperature information.

The tempering time adjusting step allows the tempering time to be adjusted through

$$t = [\ln\{(M_0 - M_f)/(M - M_f)\} \times \{A\exp(-Q/RT)\}^{-N}]^{1/N}.$$

According to the induction heat treatment method of the present invention, tempering of a short period of time at high temperature through high-frequency heating of a workpiece such as steel is allowed. The number of tempering steps can be reduced. Furthermore, a worked product of high efficiency can be provided. In addition, a predetermined heat treatment quality can be achieved whatever the type of material treated.

(Example 1)

An induction tempering process was conducted using the induction heat treatment apparatus of Fig. 1. The present apparatus includes temperature control means and tempering control means. The temperature control means includes a coil qualified as heating means 2 for high-frequency heating a workpiece 1, a radiation thermometer qualified as temperature-control-dedicated temperature measuring means 3 for measuring the temperature of workpiece 1 heated by heating means 2, and a personal computer qualified as temperature adjusting means 4 connected to the radiation thermometer to output a temperature control signal to heating means 2 based on the temperature information from the radiation thermometer.

The tempering control means includes a radiation thermometer qualified as tempering-dedicated temperature measuring means 5 for measuring the tempering temperature of workpiece 1 heated by heating means 2, and a personal computer qualified as tempering time adjusting means 6 connected to this radiation thermometer to adjust the tempering time based on the temperature information from the radiation thermometer. Tempering time adjusting means 6 adjusts tempering time t through

$$t = [\ln\{(M_0 - M_f)/(M - M_f)\} \times \{A\exp(- Q/RT)\}^{-N}]^{1/N}.$$

In the present example, a 6206 type outer ring made of SUJ2 was taken as the workpiece, quenched at 850°C in an RX gas atmosphere furnace. With regards to the heat treatment standard of the SUJ2 material, the hardness after tempering was set to at least 58 HRC and not more than 62 HRC. Further, a radio-frequency power supply of 80 kHz was employed for the coil. Although temperature-control-dedicated temperature measuring means 3 and tempering-dedicated temperature measuring means 5 are indicated as separate units for the sake of description in Fig. 1, the same radiation thermometer was used therefor in the present example. The tempering time corresponds to the period of the hardness of the temperature measured region arriving at 60 HRC. The determined conditions were input to the personal computer, and the heat pattern of workpiece 1 was controlled under PID control. At the same time, the measured temperature information of workpiece 1 was input into the personal computer for adjustment of the tempering time.

The results of the induction tempering corresponding to different heat treatment conditions are shown in Table 1. It is appreciated from Table 1 that, although the processing time could be shortened in proportion to a higher tempering temperature, unevenness in tempering (unevenness in hardness) became more significant. However, a worked product that is within the range of the quality and standard set (at least 58 HRC and not more than 62 HRC) could be obtained under each of these conditions by the current process.

Table 1

| Heat Treatment Condition | | | Hardness (HRC) | |
|---|---|---|---|---|
| Highest Temperature (°C) | Rate of Increase in Temperature (°C/sec.) | Processing Time (sec.) | Measured Value | Unevenness |
| 300 | 100 | 95 | 59.5 - 60.8 | 1.3 |
| 270 | 100 | 1500 | 59.8 - 60.3 | 0.5 |
| 240 | 100 | 5100 | 59.9 - 60.1 | 0.2 |

It should be understood that the embodiments and examples disclosed herein are illustrative and non-restrictive in every respect. The scope of the present invention is defined by the terms of the claims, rather than the description above, and is intended to include any modification within the scope and meaning equivalent to the terms of the claims.

**Industrial Applicability**

Induction tempering can be conducted by the least number of steps, and a heat treated product of high quality can be provided.

**Claims**

1. An induction heat treatment apparatus for tempering through high-frequency heating of a workpiece (1), comprising temperature control means for adjusting a temperature of a heating workpiece.

2. The induction heat treatment apparatus according to claim 1, wherein said temperature control means comprises heating means (2) for high-frequency heating a workpiece (1), temperature-control-dedicated temperature measuring means (3) for measuring a temperature of the workpiece (1) heated by the heating means (2), and temperature adjusting means (4) connected to said temperature measuring means (3) for providing a temperature control signal to the heating means (2) based on temperature information from said temperature measuring means (3),
further comprising tempering control means including tempering-dedicated temperature measuring means (5) for measuring a tempering temperature of the workpiece (1) heated by the heating means (2), and tempering time adjusting means (6) connected to said temperature measuring means (5) for adjusting a tempering time based on temperature information from said temperature measuring means (5).

3. The induction heat treatment apparatus according to claim 2, wherein said tempering time adjusting means (6) adjusts the tempering time based on an equation of:

$$t = [\ln\{(M_0 - M_f)/(M - M_f)\} \times \{A\exp(-Q/RT)\}^{-N}]^{1/N}$$

(where t: tempering time, $M_0$: hardness after quenching, $M_f$: hardness of raw material, M: hardness after tempering, A: vibration factor term, Q: activation energy, R: gas constant, T: tempering temperature, N: time index).

4. The induction heat treatment apparatus according to claim 1, wherein said workpiece includes steel.

5. An induction heat treatment method for tempering through high-frequency heating of a workpiece, comprising a temperature control step of adjusting a temperature of a heating workpiece, and a tempering control step of measuring a tempering temperature to adjust a tempering time,
wherein said temperature control step includes a heating step of high-frequency heating a workpiece, a temperature-control-dedicated temperature measuring step of measuring a temperature of a heated workpiece, and a temperature adjusting step of providing a temperature control signal based on measured temperature information for control of heating of the workpiece,
wherein said tempering control step includes a tempering-dedicated temperature measuring step of measuring a tempering temperature of a heating workpiece, and a tempering time adjusting step of adjusting a tempering time based on measured temperature information.

6. The induction heat treatment method according to claim 5, wherein said tempering time adjusting step adjusts the tempering time based on an equation of:

$$t = [\ln\{(M_0 - M_f)/(M - M_f)\} \times \{A\exp(-Q/RT)\}^{-N}]^{1/N}.$$

7. A worked product produced by the induction heat treatment method defined in claim 5.

**FIG.1**

**FIG.2**

FIG.3

$$M_1 = M_0 - (M_0 - M_f)X\{T_1, \Delta t\}$$

OBTAIN $t_1^*$  REQUIRED FOR THE FOLLOWING CALCULATION FROM

$$M_1 = M_0 - (M_0 - M_f)X\{T_1, t_1^*\}$$

$$M_2 = M_0 - (M_0 - M_f)X\{T_2, t_1^* + \Delta t\}$$

$$M_n = M_0 - (M_0 - M_f)X\{T_n, t_{n-1}^* + \Delta t\}$$

$$t_n^* = \sqrt[N]{\ln\left(\frac{M_0 - M_f}{M_n - M_f}\right) \times \left[A\exp\left(\frac{-Q}{RT}\right)\right]^{-N}}$$

**INTERNATIONAL SEARCH REPORT**

| International application No. |
|---|
| PCT/JP2005/017695 |

A. CLASSIFICATION OF SUBJECT MATTER
*C21D1/18*(2006.01), *C21D1/42*(2006.01), *H05B6/06*(2006.01)

According to International Patent Classification (IPC) or to both national classification and IPC

B. FIELDS SEARCHED

Minimum documentation searched (classification system followed by classification symbols)
*C21D1/18*(2006.01), *C21D1/42*(2006.01), *H05B6/06*(2006.01), *C21D11/00*(2006.01)

Documentation searched other than minimum documentation to the extent that such documents are included in the fields searched
Jitsuyo Shinan Koho 1922-1996 Jitsuyo Shinan Toroku Koho 1996-2005
Kokai Jitsuyo Shinan Koho 1971-2005 Toroku Jitsuyo Shinan Koho 1994-2005

Electronic data base consulted during the international search (name of data base and, where practicable, search terms used)
WPI JSTPlus(JOIS)

C. DOCUMENTS CONSIDERED TO BE RELEVANT

| Category* | Citation of document, with indication, where appropriate, of the relevant passages | Relevant to claim No. |
|---|---|---|
| Y | JP 7-179952 A (The Japan Steel Works, Ltd.), 18 July, 1995 (18.07.95), Claims (Family: none) | 1-7 |
| Y | JP 6-108144 A (Mazda Motor Corp.), 19 April, 1994 (19.04.94), Par. Nos. [0001], [0005] to [0007], [0010], [0012], [0013] (Family: none) | 1-7 |
| Y | JP 50-144154 A (Tokyo Shibaura Electric Co., Ltd.), 19 November, 1975 (19.11.75), Claims (Family: none) | 1-7 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 December, 2005 (19.12.05) | 27 December, 2005 (27.12.05) |

| Name and mailing address of the ISA/ Japanese Patent Office | Authorized officer |
|---|---|
| Facsimile No. | Telephone No. |

Form PCT/ISA/210 (second sheet) (April 2005)

**INTERNATIONAL SEARCH REPORT**

| International application No. |
| --- |
| PCT/JP2005/017695 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 10-102137 A  (Sumitomo Metal Industries, Ltd.), 21 April, 1998 (21.04.98), Claims; Par. Nos. [0018], [0023] (Family: none) | 3,6 |
| E,X E,Y | JP 2005-325408 A  (NTN Corp.), 24 November, 2005 (24.11.05), Claims (Family: none) | 1 2-7 |
| E,X E,Y | JP 2005-325409 A  (NTN Corp.), 24 November, 2005 (24.11.05), Claims (Family: none) | 1 2-7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10102137 A

**Non-patent literature cited in the description**

- **J. H. HOLLOMON ; L. D. JAFFE.** *Trans. Met. soc. Aime,* 1945, vol. 162, 223
- *Iron and Steel,* 1998, vol. 74, 334, 342
- **KAWASAKI et al.** *Iron and Steel,* 1988, vol. 74, 334
- **KAWASAKI et al.** *Iron and Steel,* 1988, vol. 74, 342